# EUROPÄISCHE PATENTSCHRIFT

(11) **EP 0 939 301 B1**
(45) Veröffentlichungstag und Bekanntmachung des Hinweises auf die Patenterteilung: **17.03.2004**
(21) Anmeldenummer: 98122833.1
(22) Anmeldetag: 01.12.1998
(51) Int. Cl.: G01D 11/28, G12B 11/00

(54) **Zeigerinstrument**
Pointer instrument
Instrument à aiguille

(30) Priorität: 25.02.1998 DE 19807482
(43) Veröffentlichungstag der Anmeldung: 01.09.1999
(73) Patentinhaber: Siemens Aktiengesellschaft, 80333 München (DE)
(72) Erfinder: Turck, Heinz, 65779 Kelkheim (DE)

(56) Entgegenhaltungen:
- EP-A- 0 692 699
- US-A- 5 523 922
- PATENT ABSTRACTS OF JAPAN vol. 097, no. 012, 25. Dezember 1997 & JP 09 222340 A (NIPPON SEIKI CO LTD), 26. August 1997

## Beschreibung

Die Erfindung betrifft ein Zeigerinstrument, vorzugsweise zum Einsatz in einem Kraftfahrzeug, mit einem beleuchtbaren Zifferblatt, mit einer an einer angetriebenen Zeigerwelle angeordneten Zeigerfahne, wobei die Zeigerwelle zugleich als Lichtleiter ausgeführt ist, und mit einer Lichtquelle, deren Licht in die Zeigerwelle einkoppelbar ist.

Zeigerinstrumente der vorstehenden Art sind allgemein bekannt und gebräuchlich (siehe z.B. EP-A-0 692 699). Sie sollen möglichst leicht ablesbar sein. Dabei ist es wünschenswert, dass der Betrachter bei genauem Hinsehen einen angezeigten Wert möglichst genau ablesen kann, bei flüchtigem Hinsehen jedoch zumindest ungefähr Aufschluss über den angezeigten Wert erhält. Bei einer Geschwindigkeitsanzeige muss man beispielsweise zur Vermeidung von Geschwindigkeitsüberschreitungen die gefahrene Geschwindigkeit genau ablesen können, während es bei Annäherung an eine enge Kurve, zum Beispiel eine Autobahnausfahrt, genügt, durch einen raschen Blick die ungefähre Fahrgeschwindigkeit zu erkennen.

Deshalb wird bei dem eingangs genannten Zeigerinstrument insbesondere bei Dunkelheit die Ablesbarkeit dadurch erleichtert, dass die Zeigerfahne beleuchtet ist. Hierzu wird das von der Lichtquelle abgestrahlte und in die als Lichtleiter ausgeführte Zeigerwelle eingeleitete Licht in die Zeigerfahne gelenkt, wo es austritt und für den Betrachter sichtbar wird. Dadurch erscheint bei Dunkelheit die Zeigerfahne als helle Linie oder Fläche und ist leicht zu erkennen.

Es ist weiterhin bekannt, das Zifferblatt möglichst gleichmäßig auszuleuchten, um eine gute Ablesbarkeit der Symbole und Ziffern zu gewährleisten. Hierzu ist vor allem eine indirekte Beleuchtung gebräuchlich, wodurch Blendwirkungen wirkungsvoll vermieden werden können.

Andere Zeigerinstrumente besitzen hierzu ein transluzentes Zifferblatt, so dass die Symbole und Ziffern von hinten beleuchtet werden können.

Nachteilig bei dem beschriebenen Stand der Technik wirkt sich vor allem aus, dass bei einem flüchtigen Blick auf das Zifferblatt einerseits die Winkelstellung der Zeigerfahne zumeist sofort erfasst wird, andererseits die Zuordnung der Winkelstellung zu dem entsprechenden Wert auf dem Zifferblatt vom Betrachter lediglich aufgrund seiner Erfahrung vorgenommen werden kann, da das Ablesen des zugehörigen Wertes eine erhöhte Aufmerksamkeit erfordert. Dies führt dazu, dass der Betrachter sich des tatsächlich angezeigten Wertes oftmals nicht bewusst ist. Dies tritt verstärkt auf, wenn sich der Betrachter noch in einer Eingewöhnungsphase an das Zeigerinstrument befindet.

Der Erfindung liegt das Problem zugrunde, ein Zeigerinstrument der eingangs genannten Art so zu gestalten, dass bei einem flüchtigen Hinsehen möglichst rasch der angezeigte Wert vom Betrachter erfasst werden kann.

Dieses Problem wird erfindungsgemäß dadurch gelöst, dass die Zeigerwelle eine Lichtauskoppelfläche besitzt, welche zum Beleuchten einer Teilfläche des Zifferblattes im Bereich der Zeigerfahne ausgebildet ist. Bei einem solchen Zeigerinstrument erkennt man beim raschen Hinsehen im Zeigerbereich eine hell hervortretende Teilfläche des Zifferblattes, so dass zumindest der ungefähr angezeigte Wert des Zeigerinstrumentes leicht ablesbar ist, ohne dass man bei nur flüchtigem Hinsehen die Position der Zeigerfahne zunächst genau erfassen muss. Will man das Zeigerinstrument genau ablesen, dann findet man durch die helle Teilfläche die Zeigerfahne gegenüber einem gleichmäßig hell beleuchteten Zifferblatt wesentlich schneller. Weiterhin kann durch die helle Teilfläche die jeweilige, im Bereich der Zeigerfahne liegende Ziffer oder Markierung optisch stärker hervortreten und ist dadurch besser erkennbar. Außerdem wird die Ablesbarkeit durch den Kontrast zwischen der Zeigerfahne und der hellen Teilfläche des Zifferblattes verbessert.

Vorteilhaft ist hierbei eine Ausführungsform des Zeigerinstrumentes, bei der die Lichtauskoppelfläche zur schwachen Beleuchtung der Randbereiche und zur starken Beleuchtung der mittleren Bereiche der Teilfläche des Zifferblattes ausgebildet ist. Hierdurch wird der Blick des Betrachters auch bei lediglich flüchtigem Blick auf das Zifferblatt zu der angezeigten Ziffer oder Markierung hingeleitet. Die besonders hell erleuchtete und damit besonders augenfällige Ziffer ist demnach zugleich der angezeigte Wert. Insbesondere bei Dunkelheit kann dabei ein Blick auf den am hellsten beleuchteten Bereich des Zifferblattes genügen, wobei die Erfassung der Zeigerfahne selbst entbehrlich sein kann.

Zum Erkennen der wesentlichen Ziffern und Markierungen genügt die Beleuchtung lediglich der Teilfläche des Zifferblattes. Häufig ist es jedoch wünschenswert, wenn die Lichtauskoppelfläche zur hellen Beleuchtung der Teilfläche des Zifferblattes im Bereich der Zeigerfahne und zur schwachen Beleuchtung der übrigen Fläche des Zifferblattes ausgebildet ist und somit auch das Ablesen der nicht angezeigten Werte oder weiterer Ziffern und Markierungen des Zifferblattes ermöglicht. Eine zusätzliche indirekte Beleuchtung kann daher entfallen, wodurch das Zeigerinstrument einfach und kostengünstig in der Herstellung ist.

Eine andere vorteilhafte Ausführungsform der Erfindung ist gegeben, wenn das Zifferblatt transluzent ist und die Lichtauskoppelfläche aus dem Blickwinkel eines Betrachters hinter dem Zifferblatt angeordnet ist. Hierdurch treten die angezeigten Werte noch deutlicher hervor. Außerdem kann die Zeigerfahne unmittelbar vor dem Zifferblatt angeordnet werden, da der Abschnitt, in dem die Lichtauskoppelfläche angeordnet ist, anstelle einer Position zwischen der Zeigerfahne und dem Zifferblatt in einer Position hinter dem Zifferblatt angeordnet ist. Das Zeigerinstrument ist damit erheblich besser ablesbar.

Eine besonders vorteilhafte Weiterbildung der Erfindung ist gegeben, wenn die Zeigerfahne beleuchtbar ausgebildet ist. Hierdurch lässt sich die Ablesbarkeit weiter verbessern, indem beispielsweise die Zeigerfahne in einer gegenüber der beleuchteten Teilfläche des Zifferblattes unterschiedlichen Farbe beleuchtbar ist und dadurch besonders kontrastreich erscheint. Geeignet sind hierzu Signalfarben, die insbesondere auch die Ablesbarkeit bei schwachem Tageslicht oder in der Dämmerung verbessern.

Zu diesem Zweck ist es besonders günstig, wenn die Lichtauskoppelfläche für das Licht teildurchlässig ausgebildet ist. Das von der Lichtquelle in die als Lichtleiter ausgeführte Zeigerwelle eingeleitete Licht kann hierdurch an der Lichtauskoppelfläche geteilt werden, so dass der eine Teil des Lichtes auf das Zifferblatt projiziert wird und der andere Teil des Lichtes durch die Lichtauskoppelfläche hindurchtritt und zur Beleuchtung der Zeigerfahne dient. Eine zusätzliche Lichtquelle zur Beleuchtung der Zeigerfahne kann daher entfallen, wodurch die Herstellkosten reduziert werden können.

Besonders auffallend ist die Anzeige gestaltet, wenn in die als Lichtleiter ausgeführte Zeigerwelle das Licht einer zweiten Lichtquelle einkoppelbar ist, die eine gegenüber der ersten Lichtquelle unterschiedliche Farbe besitzt. Hierdurch kann die Farbe der beleuchteten Teilfläche des Zifferblattes in Abhängigkeit von der Winkellage der Zeigerfahne veränderlich sein. Hierzu ändert sich der Anteil der jeweiligen Lichtquelle an dem insgesamt eingeleiteten Licht, das während der Drehbewegung der Zeigerwelle in diese eingeleitet wird. Beispielsweise kann man bei einer Drehzahlanzeige eine Teilfläche des Zifferblattes rot beleuchten, wenn sich die Drehzahl kritischen Werten nähert.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt in
- Fig. 1: in einer seitlichen Ansicht eine geschnittene Prinzipdarstellung eines erfindungsgemäßen Zeigerinstrumentes,
- Fig. 2: das in Figur 1 dargestellte, erfindungsgemäße Zeigerinstrument in einer perspektivischen, teilweise geschnittenen Prinzipdarstellung,
- Fig. 3: in einer seitlichen Ansicht eine geschnittene Prinzipdarstellung eines weiteren erfindungsgemäßen Zeigerinstrumentes mit einem transluzenten Zifferblatt.

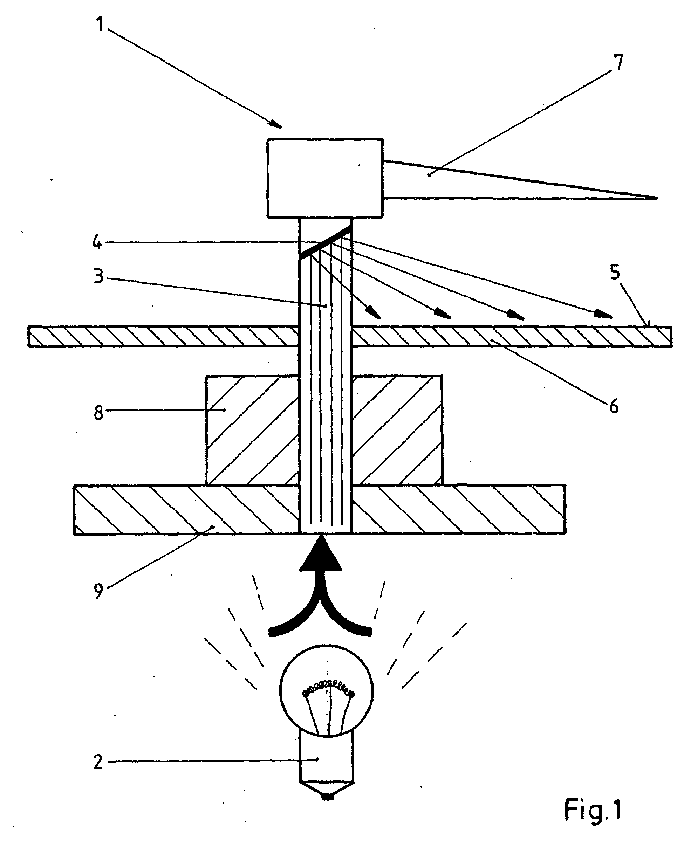

Die Figur 1 zeigt ein Zeigerinstrument 1 in einer seitlichen, geschnittenen Prinzipdarstellung. Symbolhaft ist eine Lichtquelle 2 dargestellt, deren abgegebenes Licht in eine als Lichtleiter ausgeführte Zeigerwelle 3 eingeleitet wird. Das Licht gelangt von dort zu einer Lichtauskoppelfläche 4, welche das Licht auf eine Vorderseite 5 eines Zifferblattes 6 projiziert. Oberhalb der Lichtauskoppelfläche 4 ist an der Zeigerwelle 3 eine Zeigerfahne 7 angeordnet. Die Zeigerwelle 3 ist mit der an ihr angeordneten Zeigerfahne 7 und der Lichtauskoppelfläche 4 mittels eines Zeigerantriebs 8, welcher unmittelbar oberhalb einer Leiterplatte 9 angeordnet ist, antreibbar.

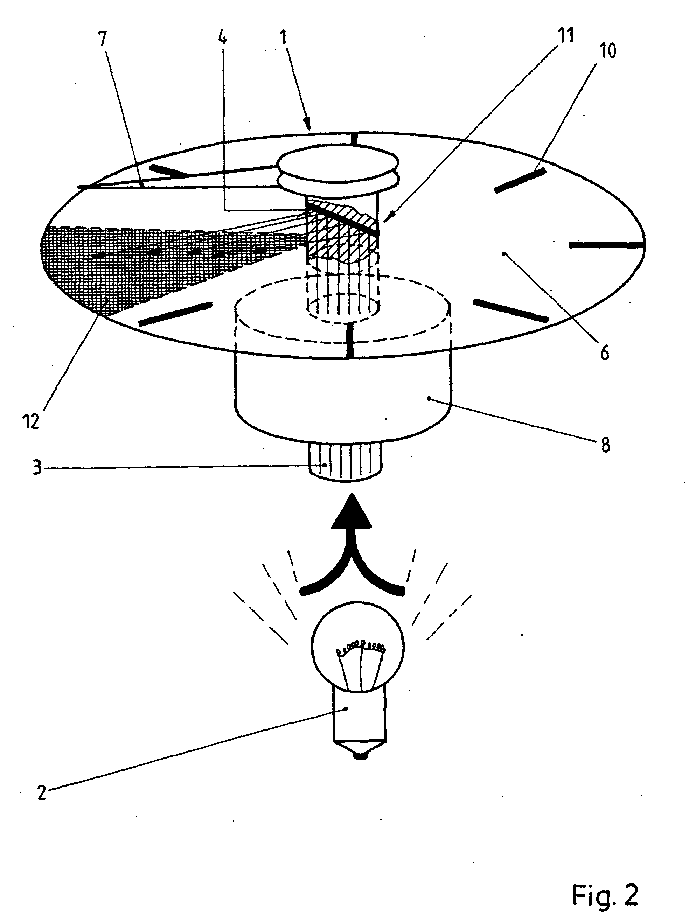

Figur 2 zeigt das Zeigerinstrument 1 in einer perspektivischen Prinzipdarstellung. Von der symbolhaft dargestellten Lichtquelle 2 gelangt das Licht in die als Lichtleiter ausgeführte Zeigerwelle 3. Die Zeigerwelle 3 durchstößt das mit Markierungen 10 versehene Zifferblatt 6 mittig und ist in einem Abschnitt 11 zwischen dem Zifferblatt 6 und der Zeigerfahne 7 geschnitten dargestellt. In diesem Abschnitt ist die Lichtauskoppelfläche 4 angeordnet, von wo das Licht auf eine in etwa kreissegmentförmige Teilfläche 12 des Zifferblattes 6 projiziert wird und diese beleuchtet. Es ist weiterhin der teilweise gestrichelt dargestellte Zeigerantrieb 8 zu erkennen, der einen Abschnitt der Zeigerwelle 3 ringförmig umschließt.

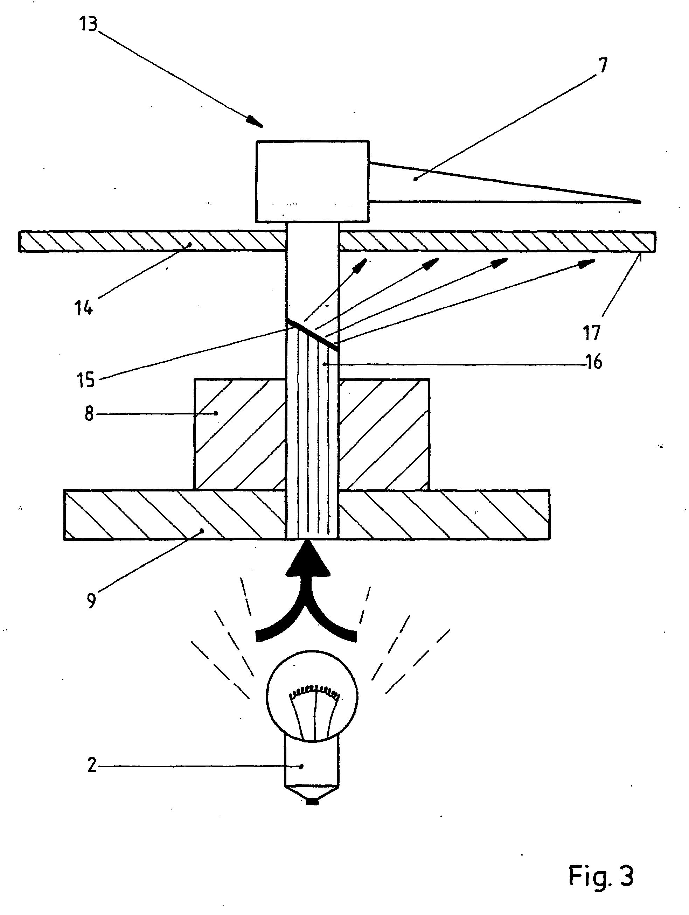

Figur 3 zeigt eine andere Ausführungsform eines Zeigerinstrumentes 13 mit einem transluzenten Zifferblatt 14. Eine Lichtauskoppelfläche 15 lenkt das Licht gegen eine dem Betrachter abgewandte Rückseite 17 des Zifferblattes 14. Die nicht dargestellten Markierungen des Zifferblattes 14 sind entweder lichtundurchlässig und sind dadurch als dunkle Fläche vor dem durchleuchteten Zifferblatt 14 zu erkennen oder treten als lichtdurchlässige Bereiche gegenüber den verbleibenden lichtundurchlässigen Bereichen des Zifferblattes 14 hervor. Die Zeigerfahne 7, der Zeigerantrieb 8, die Leiterplatte 9 sowie die Lichtquelle 2 entsprechen der in Figur 1 dargestellten Ausführungsform und werden daher nicht weiter beschrieben.

Nicht dargestellt ist eine Ausführungsform, bei der das von der Lichtquelle ausgehende Licht an der Lichtauskoppelfläche geteilt wird und teilweise auf einen Teilbereich des Zifferblattes projiziert wird und teilweise weiter zu der Zeigerfahne gelangt und diese beleuchtet.

Auch nicht dargestellt ist eine Ausführungsform, bei der eine das Zifferblatt beleuchtende Lichtquelle drehfest an oder in der Zeigerwelle angeordnet ist. Hierbei sind die Lichtleitstrecken besonders kurz, wodurch sich ein geringer Lichtverlust und damit eine hohe Beleuchtungsintensität ergibt.

## Patentansprüche

1. Zeigerinstrument, vorzugsweise zum Einsatz in einem Kraftfahrzeug, mit einem beleuchtbaren Zifferblatt, mit einer an einer angetriebenen Zeigerwelle angeordneten Zeigerfahne, wobei die Zeigerwelle zugleich als Lichtleiter ausgeführt ist, und mit einer Lichtquelle, deren Licht in die Zeigerwelle einkoppelbar ist, **dadurch gekennzeichnet, dass** die Zeigerwelle (3, 16) eine Lichtauskoppelfläche (4, 15) besitzt, welche zum Beleuchten einer Teilfläche (12) des Zifferblattes (6, 14) im Bereich der Zeigerfahne (7) ausgebildet ist.

2. Zeigerinstrument nach Anspruch 1, **dadurch gekennzeichnet, dass** die Lichtauskoppelfläche (4, 15) zur schwachen Beleuchtung der Randbereiche und zur starken Beleuchtung der mittleren Bereiche der Teilfläche (12) des Zifferblattes (6, 14) ausgebildet ist.

3. Zeigerinstrument nach Anspruch 1 oder 2, **dadurch gekennzeichnet, dass** die Lichtauskoppelfläche (4, 15) zur hellen Beleuchtung der Teilfläche (12) des Zifferblattes (6, 14) im Bereich der Zeigerfahne (7) und zur schwachen Beleuchtung der übrigen Fläche des Zifferblattes (6, 14) ausgebildet ist.

4. Zeigerinstrument nach einem der Ansprüche 1 bis 3, **dadurch gekennzeichnet, dass** das Zifferblatt (14) transluzent ist und die Lichtauskoppelfläche (15) aus dem Blickwinkel eines Betrachters hinter dem Zifferblatt (14) angeordnet ist.

5. Zeigerinstrument nach einem der vorangehenden Ansprüche, **dadurch gekennzeichnet, dass** die Zeigerfahne (7) beleuchtbar ausgebildet ist.

6. Zeigerinstrument nach einem der vorangehenden Ansprüche, **dadurch gekennzeichnet, dass** die Lichtauskoppelfläche (4, 15) für das Licht teildurchlässig ausgebildet ist.

7. Zeigerinstrument nach einem der vorangehenden Ansprüche, **dadurch gekennzeichnet, dass** in die als Lichtleiter ausgeführte Zeigerwelle (3, 16) das Licht einer zweiten Lichtquelle einkoppelbar ist, die eine gegenüber der ersten Lichtquelle (3) unterschiedliche Farbe besitzt.

## Claims

1. Pointer instrument, preferably for use in a motor vehicle, having a pointer dial which can be illuminated, having a pointer finger which is arranged on a driven pointer shaft, with the pointer shaft at the same time acting as a light guide, and having a light source whose light can be coupled into the pointer shaft, **characterized in that** the pointer shaft (3, 16) has a light output surface (4, 15) which is designed to illuminate a subarea (12) of the pointer dial (6, 14) in the area of the pointer finger (7).

2. Pointer instrument according to Claim 1, **characterized in that** the light output surface (4, 15) is designed to weakly illuminate the edge areas and to intensively illuminate the central areas of the subarea (12) of the pointer dial (6, 14).

3. Pointer instrument according to Claim 1 or 2, **characterized in that** the light output surface (4, 15) is designed to brightly illuminate the subarea (12) of the pointer dial (6, 14) in the area of the pointer finger (7) and to weakly illuminate the rest of the area of the pointer dial (6, 14).

4. Pointer instrument according to one of Claims 1 to 3, **characterized in that** the pointer dial (14) is translucent, and the light output surface (15) is arranged behind the pointer dial (14), when seen from the viewing angle of an observer.

5. Pointer instrument according to one of the preceding claims, **characterized in that** the pointer finger (7) is designed such that it can be illuminated.

6. Pointer instrument according to one of the preceding claims, **characterized in that** the light output surface (4, 15) is designed to be partially translucent for the light.

7. Pointer instrument according to one of the preceding claims, **characterized in that** the light from a second light source can be coupled into the pointer shaft (3, 16) which is in the form of a light guide, and the colour of this second light source is not the same as that of the first light source (3).

## Revendications

1. Instrument à aiguille, destiné notamment à l'utilisation dans un véhicule automobile, comportant un cadran pouvant être éclairé, la palette de l'aiguille étant fixée sur un arbre entraîné, l'arbre de l'aiguille étant en même temps conçu comme conducteur optique, et comportant une source de lumière dont la lumière peut être couplée dans l'arbre de l'aiguille, **caractérisé par le fait que** l'arbre de l'aiguille (3, 16) a une face de découplage de la lumière (4, 15) conçue pour éclairer une partie de la surface (12) du cadran (6, 14) dans la zone où se trouve la palette de l'aiguille (7).

2. Instrument à aiguille selon la revendication 1 **caractérisé par le fait que** la face de découplage de la lumière (4, 15) est conçue pour éclairer faiblement les zones extérieures de la partie de la surface (12) du cadran (6, 14) et pour éclairer fortement les zones centrales de la partie de la surface (12) du cadran (6, 14).

3. Instrument à aiguille selon la revendication 1 ou 2 **caractérisé par le fait que** la face de découplage de la lumière (4, 15) est conçue pour éclairer brillamment la surface partielle (12) du cadran (6, 14) dans la zone où se trouve la palette de l'aiguille (7) et pour éclairer faiblement le reste de la surface du cadran (6, 14).

4. Instrument à aiguille selon l'une des revendications 1 à 3 **caractérisé par le fait que** le cadran (14) est translucide et la face de découplage de la lumière (15) est disposée, du point de vue d'un observateur de l'instrument, derrière le cadran (14).

5. Instrument à aiguille selon l'une des revendications précédentes **caractérisé par le fait que** la palette de l'aiguille (7) est conçue de telle sorte qu'elle peut être éclairée.

6. Instrument à aiguille selon l'une des revendications précédentes **caractérisé par le fait que** la face d e découplage d e la lumière (4, 15) est conçue de telle sorte qu'elle est partiellement transparente à la lumière.

7. Instrument à aiguille selon l'une des revendications précédentes **caractérisé par le fait que**, dans l'arbre de l'aiguille (3, 16) conçu comme conducteur optique, il est possible de coupler la lumière d'une deuxième source de lumière qui a une couleur différente par rapport à la première source de lumière (3).
